(19) Europäisches Patentamt

European Patent Office

Office européen des brevets

(11) **EP 1 326 357 A1**

(12) **EUROPÄISCHE PATENTANMELDUNG**

(43) Veröffentlichungstag:
    **09.07.2003 Patentblatt 2003/28**

(51) Int Cl.⁷: **H04L 1/00**, H04L 27/26,
    H04M 11/06, H04M 3/30,
    H04M 3/18, H04Q 11/04,
    H04L 1/20

(21) Anmeldenummer: **02000473.5**

(22) Anmeldetag: **08.01.2002**

(84) Benannte Vertragsstaaten:
    **AT BE CH CY DE DK ES FI FR GB GR IE IT LI LU
    MC NL PT SE TR**
    Benannte Erstreckungsstaaten:
    **AL LT LV MK RO SI**

(71) Anmelder: **SIEMENS AKTIENGESELLSCHAFT
    80333 München (DE)**

(72) Erfinder:
    • **Laskowsky, Rolf, Dr.
    80689 München (DE)**
    • **Schmoeller, Franz
    82110 Germering (DE)**

(54) **Verfahren zur Prüfung und Aufrechterhaltung einer vorbestimmten physikalischen Bitrate einer Leitungsverbindung**

(57) Verfahren zur Prüfung und Aufrechterhaltung einer vorbestimmten Bitrate einer Leitungsverbindung zwischen einer Übertragungsbaugruppe und mindestens einem Endgerät, wobei durch Auslösen einer Unterschreitung der vorbestimmten Bitrate mindestens eine Korrekturmaßnahme zur Erhöhung der Bitrate ausgelöst wird.

FIG 1

EP 1 326 357 A1

Printed by Jouve, 75001 PARIS (FR)

**Beschreibung**

Die Erfindung betrifft ein Verfahren sowie eine Anordnung zur Prüfung der Bitrate einer bidirektionalen Verbindung zwischen einer Übertragungsbaugruppe und mindestens einem Teilnehmeranschluss.

Mit zunehmender Bedeutung des Internets, sei es aus beruflichem oder privatem Interesse, steigt der Bedarf an Internet-Zugängen nahezu exponentiell an. Gleichzeitig wächst die Zahl der Internet-Inhalte und -Anwendungen, z. B. Sprache, Musik, Bewegtbildsequenzen und Videokonferenzen, die höhere Übertragungsraten erfordern als sie analoge Modems oder ISDN-Verbindungen zur Verfügung stellen können. Während der Ausbau der zentralen Verbindungen des Internets zu Hochgeschwindigkeitsnetzen zügig voranschreitet, sind Internet-Anwender ohne einen Zugang per Standleitung auf langsame Verbindungen mit einer Bruttodatenrate von maximal 128 kBit/s (ISDN mit zwei B-Kanälen) angewiesen.

Zu einer weitaus schnelleren Übertragung dienen Übertragungen mittels Digital Subscriber Line (DSL), die die Übertragung digitaler Signale mit hoher Geschwindigkeit auf herkömmlichen Kupferleitungen, also auch auf Telefonleitungen, ermöglichen. Mit der Einführung der DSL-Technologie ergeben sich für Telefongesellschaften Vorteile. So sind die benötigten Kupferdoppeladern fast überall vorhanden, so daß die meisten Haushalte ohne große Investitionen mit einem breitbandigen DSL-Zugang ausgestattet werden können. Die Bandbreite lässt sich dabei in weiten Grenzen variieren, um die unterschiedlichen Ansprüche von Privat- und Geschäftskunden zu bedienen. Datenverkehr und Telefonie sind gleichzeitig möglich und im Vergleich zu anderen Technologien mit hoher Datenrate werden nur geringe elektromagnetische Abstrahlungen an die Umwelt abgegeben.

Es gibt inzwischen eine Vielzahl von verschiedenen DSL-Technoiogien, zu den bekanntesten zählen Asymmetric Digital Subscriber Line (ADSL), Very High Data Rate Digital Subscriber Line (VDSL), High Data Rate Digital Subsrciber Line (HDSL) und Single Line Digital Subscriber Line (SDSL).

Insbesondere dem ADSL wird in Zukunft eine hohe Marktdurchdringung zugesprochen. ADSL-Systeme realisieren bezüglich ihrer Bitraten asymmetrische, bidirektionale Übertragungen. ADSL-Systeme erfüllen damit die Anforderungen vieler Breitbanddienste und sollen diese im Anschlußbereich sehr wirtschaftlich zum Wohnsitz der Kunden verteilen.

Bei ADSL handelt es sich um eine neuartige Modemtechnologie, die Hochgeschwindigkeitsübertragungen über existierende Doppeladerleitungen ermöglicht. Die ADSL-Technologie ermöglicht Übertragungsraten von mehr als 6 MBit/s in Richtung des Teilnehmers und maximal 640 kBit/s in die Rückrichtung. Die Verbindung besteht aus drei Informationskanälen: einem Hochgeschwindigkeitskanal in Richtung des Teilnehmers, einem Duplexkanal mittlerer Geschwindigkeit und einem konventionellen Telefonkanal. Das asymmetrische Übertragungsverfahren wird daher verwendet, da bei einer typischen Internet-Anwendung grundsätzlich mehr Daten empfangen als gesendet werden. Ermöglicht wird diese Asymmetrie dadurch, dass beim Versenden von Daten ein schmaleres Frequenzband zur Verfügung steht als beim Datenempfang.

Zu einer weiteren bekannten Variante der DSL-Technologien zählt die Single Line Digital Subscriber Line (SDSL). Auch SDSL benötigt zur Übertragung ein einziges Doppeladerpaar; ferner wird gleichzeitig ein konventioneller Telefonverkehr ermöglicht. SDSL ist für Applikationen mit symmetrischen Übertragungsraten ausgelegt und stellt somit das Gegenstück zu ADSL dar.

Ein Problem ist, dass mit wachsender Leitungslänge und höherer Frequenz unerwünschte Signalkoppelungen entstehen. Werden symmetrische Signale in vielen Doppeladern eines Kabels übertragen, so wird die mögliche Bitrate deutlich begrenzt.

Dies wirkt sich als äußerst nachteilig aus, dass die Begrenzung der Bitrate oftmals nicht vorhersehbar ist, woraus eine Vielzahl an Problemen, insbesondere Synchronisationsproblemen, in der Datenübertragung resultieren.

Der Erfindung liegt daher die Aufgabe zugrunde, ein einfach und kostengünstig in einem DSL-Datennetz einsetzbares Verfahren zur Prüfung und Aufrechterhaltung sowie Festlegung der Bitrate sowie eine zur Durchführung dieses Verfahrens geeignete Anordnung anzugeben.

Diese Aufgabe wird gemäß ihrem Verfahrensaspekt durch zwei unabhängige Verfahren mit den Merkmalen der Ansprüche 1 und 2 sowie nach ihrem Anordnungsaspekt durch eine Anordnung mit den Merkmalen der Ansprüche 12 und 13 gelöst.

Erfindungsgemäß wird die Aufgabe durch ein Verfahren mit den folgenden Verfahrensschritten gelöst:

    a) Einstellen einer physikalischen Bitrate und Speichern in einem Bitraten-Schwellwertspeicher,
    b) Einstellen mindestens einer Korrekturmaßnahme zur Erhöhung der Bitrate,
    c) Erfassen der aktuellen Bitrate zwischen einer Leitungskarte der Übertragungsbaugruppe und dem Endgerät getriggert durch ein Auslösesignal,
    d) Vergleichen der erfassten Bitrate mit der in dem Bitraten-Schwellwertspeicher der Leitungskarte gespeicherten physikalischen Bitrate durch eine Vergleichereinrichtung und Generierung einer Alarmmeldung bei einem Unterschreiten der physikalischen Bitrate durch eine Alarmeinrichtung,
    e) Übertragen der Alarmmeldung an ein externes Steuersystem und
    f) Auslösen der mindestens einen voreingestellten Korrekturmaßnahme durch eine Korrektureinrichtung im Ansprechen auf die Alarmmeldung durch das externe Steuersystem.

Ein wesentlicher Gedanke des erfindungsgemäßen Verfahrens besteht also darin, eine automatisch kostensparende Überwachung der aktuellen Bitrate der bidirektionalen Verbindung zwischen der Übertragungsbaugruppe und dem Teilnehmeranschluss anzubieten, so dass ein Absinken der Bitrate der Verbindung rechtzeitig, noch vor Auftreten einer Teilnehmerbeschwerde, erkannt und Korrekturmaßnahmen eingeleitet werden können.

Gemäß einem relativ unabhängigen Aspekt der Erfindung wird die maximal erreichbare physikalische Bitrate aufgrund einer Auswertung der Bitfehlerrate bei verschiedenen Systemkonfigurationen erfasst, die bei mindestens einer Korrekturmaßnahme gegenüber einer Ausgangskonfiguration entstehen. Diese maximale Bitfehlerrate wird für den Verbindungsbetrieb eingestellt. Somit wird die physikalische Bitrate in Abhängigkeit der Bitfehlerrate erfasst.

In einer bevorzugten Ausführung wird die physikalische Bitrate, also die maximal mögliche Bitrate der bidirektionalen Verbindung, mittels folgender Verfahrensschritte erfasst:

a) Einstellen eines Bitfehlerraten-Schwellwertes und Speichern in einem Bitfehlerraten-Schwellwertspeicher,
b) Einstellen einer physikalisch maximalen Bitrate der bidirektionalen Verbindung und Speichern als aktuelle physikalische Bitrate in einem Bitraten-Schwellwertspeicher einer Leitungskarte,
c) Übertragen eines Testsignals zwischen der Übertragungsbaugruppe und dem Endgerät mit der aktuellen physikalischen Bitrate,
d) Erfassen einer Bitfehlerrate des übertragenen Testsignals mit einer Bitfehlerraten-Messeinrichtung,
e) Vergleichen der erfassten Bitfehlerrate mit dem Bitfehlerraten-Schwellwert durch eine mit der Bitfehlerraten-Messeinrichtung und dem Bitfehlerraten-Schwellwertspeicher verbundenen Vergleichereinrichtung und Generieren einer Abbruchmeldung bei einem Unterschreiten des Bitfehlerraten-Schwellwertes und Fortfahren mit Schritt g) oder Generieren einer Fehlermeldung bei einem Überschreiten des Bitfehlerraten-Schwellwertes und
f) Reduzieren der aktuellen physikalischen Bitrate und Speichern als physikalische Bitrate in dem Bitfehlerraten-Schwellwertspeicher im Ansprechen auf die Fehlermeldung und Fortfahren mit Schritt c),
g) Speichern der aktuellen physikalischen Bitrate in dem Bitraten-Schwellwertspeicher im Ansprechen auf die Abbruchmeldung.

Die physikalische Bitrate, also die maximale Bitrate mit der Daten über die Verbindung übertragen werden können, kann somit schnell und einfach iterativ ausgehandelt (trainiert) werden. Dabei wird zunächst ein Testsignal mit einer theoretisch maximal möglichen Bitrate übertragen. Diese maximal mögliche Bitrate gibt also die absolut obere Grenze des im Prinzip fehlerfrei übertragbaren Informationsflusses an. Diese Kanalkapazität C lässt sich in Abhängigkeit des Signal-/Rauschleistungs-Verhältnisses $S/N_0$ und der Bandbreite B nach der Definition von Shannon bestimmen:

$$C = B \cdot ld(1 + S/(2BN_0)) \text{ [Bit/s]}$$

Die Kanalkapazität C hängt linear von der Bandbreite B der Verbindung ab, und mit wachsender Bandbreite erhöht sich auch die übertragbare Bitrate. Allerdings treten für große Bandbreiten B und bei konstanter Nutzleistung S viele Übertragungsfehler auf. Für große Bandbreiten B wird ein endlicher Wert der Kanalkapazität C berechnet:

$$C = 0{,}72 \; S/N_0 \text{ [Bit/s]}$$

Ausgehend von dieser theoretischen Kanalkapazität wird das Testsignal übertragen. Die Bitfehlerraten-Messeinrichtung erfasst die aktuelle Bitfehlerrate und vergleicht sie mit dem zuvor eingestellten Bitfehlerraten-Schwellwert. Ist die aktuelle Bitfehlerrate größer als der Bitfehlerraten-Schwellwert, so wird die physikalische Bitrate reduziert und das Testsignal mit dieser vorliegenden Bitrate übertragen. Diese Schritte werden so lange wiederholt, bis die aktuelle Bitfehlerrate kleiner als der Bitfehlerraten-Schwellwert ist.

Diese ausgehandelte physikalische Bitrate wird dann zum Vergleich mit der aktuellen Bitrate der Verbindung nach dem zuvor genannten erfindungsgemäßen Verfahren herangezogen.

Bevorzugt wird das Auslösesignal nach einer Installation der Leitungskarte übertragen. Somit wird sichergestellt, ob eine durch die Installation der Leitungskarte verursachte veränderte Randbedingung eine Änderung der aktuellen Bitrate zur Folge hat. Das Auslösesignal kann zusätzlich oder alternativ in regelmäßigen Zeitintervallen übertragen werden. Dadurch wird insbesondere eine zeitlich kontinuierliche Überwachung der aktuellen Bitrate durchgeführt.

In einer bevorzugten Ausführung wird das Auslösesignal nach Überschreiten des Bitfehlerraten-Schwellwertes übertragen. Bei diesem Verfahren wird die Bitfehlerrate der Verbindung kontinuierlich gemessen und bei Überschreiten des zuvor erfassten Bitfehlerraten-Schwellwertes wird das Auslösesignal übertragen. Dieses Verfahren findet Anwendung bei einer Übertragung zuvor kanalkodierter Daten mit fehlererkennenden oder fehlerkorrigierenden Kanalkodierungen. Es ist bekannt, dass dann mittels einer Kanaldekodierung der Daten Rückschlüsse auf die Anzahl der Bitfehler geschlossen werden können und somit die Bitfehlerrate erfasst werden kann.

Besonders bevorzugt wird das Auslösesignal nach der Auslösung der mindestens einen Korrekturmaßnahme übertragen. Dadurch wird die Auswirkung der Maßnahme, nämlich die gewünschte Steigerung der aktuellen Bitrate, nochmals überprüft. Sollte die Korrekturmaßnahme keine oder unzureichende Auswirkungen gezeigt haben, müssten andere und/oder weitere Korrekturmaßnahmen eingeleitet werden.

In einer bevorzugten Ausführung umfasst die Korrekturmaßnahme eine Änderung einer Kabelbelegung und/oder einen Wechsel mindestens eines Übertragungsmoduls und/oder eine Änderung der Vergebührung des Datendienstes. Diese verschiedenen Korrekturmaßnahmen leiten eine Auswertung der Bitfehlerrate ein.

Diese Korrekturmaßnahmen werden in der Übertragungsbaugruppe durchgeführt. Die Änderung der Kabelbelegung wird vorzugsweise in einem Koppelfeld durchgeführt. Diese Korrekturmaßnahme ist die einfachste und zugleich kostengünstigste Methode, um einem Absinken der Bitrate entgegenzutreten. Dabei werden einfach redundante Verbindungen zwischen der Übertragungsbaugruppe und dem Teilnehmeranschluss zur Übertragung hinzugezogen. Bei den hinzugezogenen Leitungen kann es sich um Leitungen handeln, die bereits zur Datenübertragung für andere Teilnehmeranschlüsse verwendet werden, allerdings noch freie Übertragungskapazitäten aufweisen, es kann sich aber auch um Backup-Leitungen handeln, die zur Reserve dienen.

Das Absinken der Bitrate der bidirektionalen Verbindung kann auch durch ein mangelhaftes Übertragungsmodul der Übertragungsstrecke verursacht werden. Das Übertragungsmodul kann daher nach Feststellen eines Absinkens der aktuellen Bitrate ausgetauscht werden. Diese Korrekturmaßnahme ist insbesondere dann sinnvoll, wenn eine zuvor getätigte Änderung der Kabelbelegung zu keiner deutlichen Steigerung der Bitrate geführt hat.

Die Änderung der Vergebührung des Datendienstes ist insbesondere dann sinnvoll, wenn zuvor getätigte Korrekturmaßnahmen zur Erhöhung der Bitrate zu keinem Erfolg führten. Wenn die einem Teilnehmer per Vertrag zugesicherte Bitrate nicht eingehalten werden kann, sollte diese Korrekturmaßnahme durchgeführt werden.

In einer bevorzugten Ausführung werden die physikalischen Bitraten jeweils einer Übertragungsrichtung und jeweils eines Teilnehmeranschlusses von dem externen Steuersystem an die Übertragungsbaugruppe übertragen und in dem Bitraten-Schwellwertspeicher der Leitungskarte gespeichert. Somit werden die physikalischen Bitraten der jeweiligen Leitungskarte laufend aktualisiert und können jederzeit durch die Vergleichereinrichtungen der Übertragungsbaugruppe mit den aktuell erfassten Bitraten verglichen werden.

Die Meldungen werden vorzugsweise über eine SNMP-Schnittstelle an das externe Steuersystem übertragen. Es hat sich aus Kompatibilitätsgründen als äußerst vorteilhaft erwiesen, wenn die physikalischen Bitraten ebenfalls über die SNMP-Schnittstelle an die Übertragungsbaugruppe übertragen werden. Zur Übertragung der Meldungen und/oder der physikalischen Bitraten können aber auch andere geeignete Schnittstellen verwendet werden.

Es hat sich auch als äußerst vorteilhaft erwiesen, wenn die Meldungen bezüglich ihrer Priorität mittels eines Leaky-Bukket-Verfahrens übertragen werden. Unter Leaky-Bucket ist eine analoge Beschreibung für den Algorithmus zu verstehen, der für eine Übereinstimmungsüberprüfung eines Meldungsflusses in Netzwerken verwendet wird. Es handelt sich um ein Flusskontrollverfahren, bei dem ein ankommender Datenstrom mit Verkehrsparametern, die von einer Quelle gesetzt werden, verglichen wird. Vom Verfahren her werden dabei die Meldungen in einem Pufferspeicher geladen, ohne dass der Speicher überläuft. Der Pufferspeicher ermöglicht es einzelnen Meldungen zu ihrem Ziel zu gelangen (leaky). Bei einem drohenden Überlauf des Pufferspeichers bleiben nicht übereinstimmende Zellen unberücksichtigt. Damit kann die Anzahl der Meldungen weiter reduziert werden und durch Hinzufügen der tatsächlichen Bitraten kann daraufhin ein gezielter, gegebenenfalls auch richtungsbezogener Entstörungsvorgang eingeleitet werden.

In einer bevorzugten Ausführung wird die Alarmmeldung in einem Alarmmeldespeicher des externen Steuersystems gespeichert.

Vorzugsweise wird das Testsignal vor der Übertragung mit einer fehlererkennenden oder fehlerkorrigierenden Kanalkodierung kodiert und die Bitfehlerrate durch die Bitfehlerraten-Messeinrichtung anhand der erkannten oder korrigierten Bitfehler ermittelt.

Eine zweckmäßige Anordnung zur Durchführung des vorgeschlagenen Verfahrens mit den oben genannten Aspekten umfasst Hardwarekomponenten zur Realisierung dieser Aspekte, die hier nicht im einzelnen aufgezählt werden. Dazu wird auf die Unteransprüche sowie die Beschreibung eines Ausführungsbeispiels weiter unten verwiesen. Von den Figuren zeigen:

Fig. 1 eine schematische Darstellung einer Ausführungsform der Erfindung,

Fig. 2 ein Ablaufdiagramm zur Erläuterung der Korrekturmaßnahmen und

Fig. 3 ein Ablaufdiagramm zur Erläuterung der Erfassung der physikalischen Bitrate.

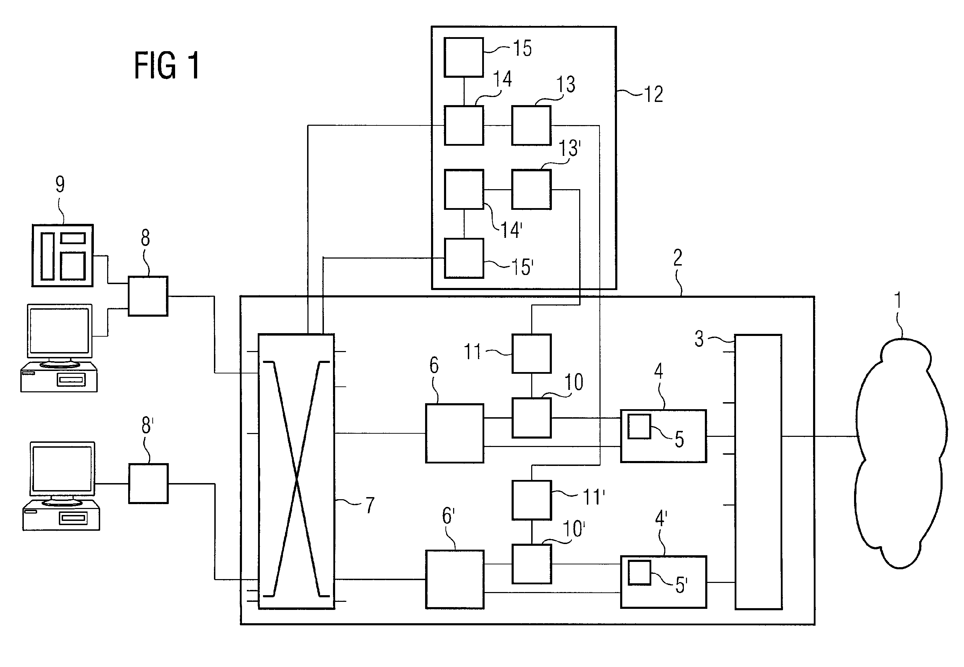

In Fig. 1 ist eine schematische Darstellung zur breitbandigen Verbindung mehrerer Teilnehmer an ein öffentliches Datennetz 1, insbesondere dem Internet, dargestellt. Eine Übertragungsbaugruppe 2 ist mittels eines Gateways 3 an das Datennetz 1 angeschlossen.

Das Gateway 3 ist mit mehreren Leitungskarten 4, 4' verbunden. Die Leitungskarten 4, 4' enthalten jeweils einen Bitraten-Schwellwertspeicher 5, 5' zum Speichern von teilnehmerbezogenen physikalischen Bitraten, also maximal erreichbaren Bitraten. Die Leitungskarten 4, 4' sind jeweils über Leitungen mit Bitraten-Messeinrichtungen 6, 6' verbunden. Die Bitraten-Messeinrichtungen sind über Leitungen eingangsseitig mit einem Koppelfeld 7 verbunden. Das Koppelfeld dient der Vermittlung und Durchschaltung der Verbindungsleitungen. Mit ihm werden völlig transparent Eingangssignale auf entsprechende Ausgänge geschaltet. Das Koppelfeld 7 besteht aus mehreren zusammengeschalteten Matrizen (Koppelvielfache) von ankommenden und abgehenden Verbindungsleitungen, die durch elektronische Kontakte miteinander verbunden werden.

Das Koppelfeld 7 ist ausgangsseitig mit Netzwerkabschlusseinheiten 8, 8' mindestens eines Teilnehmers verbunden. Die Netzwerkabschlusseinheiten sind über Leitungen mit Endgeräten 9 verbunden.

Die Bitraten-Messeinrichtungen 6, 6' sind jeweils mit einer Vergleichereinrichtung 10, 10' verbunden, die die aktuellen Bitraten mit physikalischen Bitraten, also mit jeweils teilnehmerbezogenen Bitraten-Schwellwerten vergleicht. Die jeweiligen physikalischen Bitraten sind in den Bitraten-Schwellwert-Speichern 5, 5' gespeichert, mit denen die Vergleichereinrichtung 10, 10' über Leitungen ebenfalls verbunden ist.

Sollte eine erfasste aktuelle Bitrate eine physikalische Bitrate unterscheiden, so sendet eine mit der Vergleichereinrichtung 10, 10' verbundene Alarmeinrichtung 11, 11' eine Alarmmeldung an einen innerhalb eines externen Steuersystems 12 angeordneten Alarmmeldungsspeicher 13, 13'. Die Alarmmeldungen werden dann von einer Korrektureinrichtung 14, 14' aus dem Alarmmeldungsspeicher geladen. Die Korrektureinrichtung 14, 14' ist jeweils mit einem Korrekturspeicher 15, 15' verbunden, der Maßnahmen zur Erhöhung der aktuellen Bitrate gespeichert hält.

In dieser in der Fig. 1 gezeigten Ausführung wird als Maßnahme zur Erhöhung der aktuellen Bitrate eine Änderung der Leitungsbelegung ergriffen. Die notwendigen Änderungen werden von der Korrektureinrichtung 14, 14' aus dem Korrekturspeicher 15, 15' geladen und an das Koppelfeld 7 übertragen. Das Koppelfeld 7 ändert darauf die Leitungsbelegung, indem die Daten über eine andere Leitung oder über die ursprüngliche Leitung und zusätzlich im Multiplexverfahren über eine weitere Leitung mit freier Kapazität übertragen werden.

Alternativ kann als Korrekturmaßnahme ein Wechsel eines Übertragungsmoduls ergriffen werden. In einer weiteren Ausführung kann auch eine Änderung in der Vergebührung des Datendienstes erfolgen.

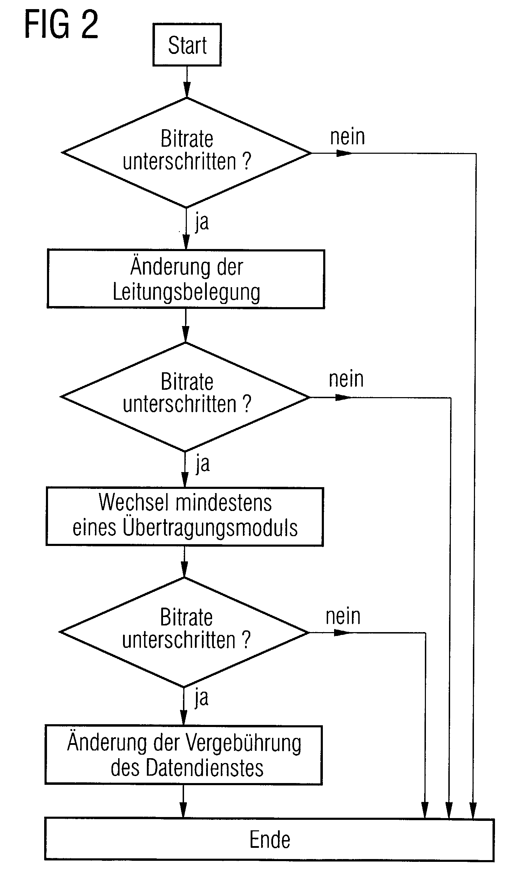

Fig. 2 zeigt ein Ablaufdiagramm zur Erläuterung der durchzuführenden Korrekturmaßnahmen im Falle eines Unterschreitens der Bitrate. Im Falle eines Unterschreitens der Bitrate wird eine Änderung der Leitungsbelegung ergriffen. Dazu werden die Daten beispielsweise über eine andere Leitungsverbindung übertragen. Nach dieser Korrekturmaßnahme wird eine Erfassung der aktuellen Bitrate durchgeführt und im Falle einer immer noch unterschrittenen Bitrate wird ein Wechsel mindestens eines Übertragungsmoduls vorgenommen. Wieder wird eine Erfassung der aktuellen Bitrate durchgeführt und im Falle einer immer noch unterschrittenen Bitrate wird eine Änderung in der Vergebührung des Datendienstes ergriffen.

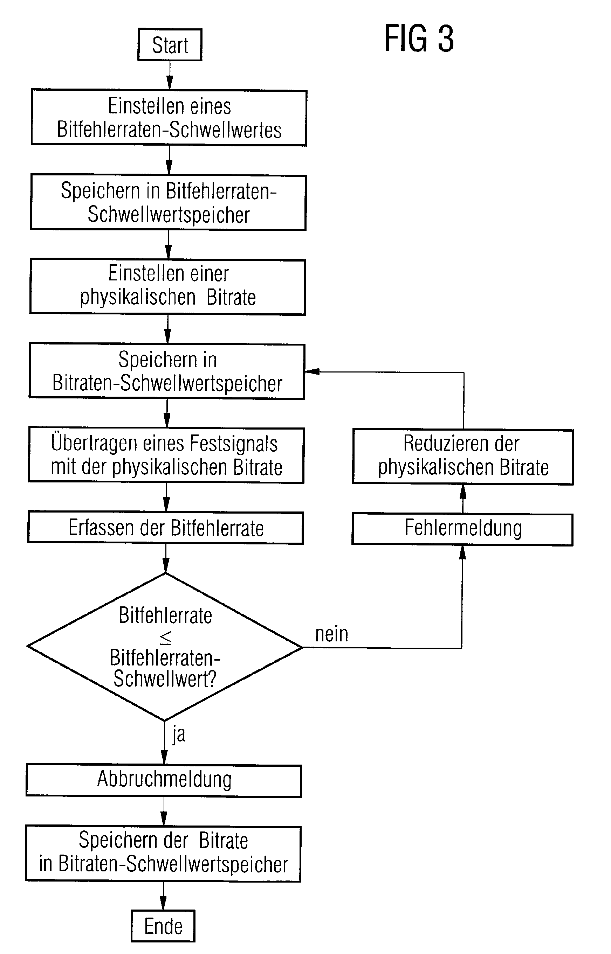

Fig. 3 zeigt ein Ablaufdiagramm zur Erläuterung der Erfassung der physikalischen Bitrate. Mittels dieses Ablaufdiagrammes wird ersichtlich, wie mit Hilfe eines Erfassens der Bitfehlerrate und einem Vergleich mit einem Bitfehlerraten-Schwellwert ein Aushandeln (Trainieren) der aktuellen Bitrate durchgeführt wird. Die physikalische Bitrate wird erfasst aufgrund einer Auswertung der Bitfehlerrate bei verschiedenen Systemkonfigurationen, die durch in der Fig. 2 dargestellte Korrekturmaßnahmen geschaffen werden. Das Ablaufdiagramm ist selbsterläuternd, so dass an dieser Stelle nicht näher darauf eingegangen wird.

Die Ausführung der Erfindung ist nicht auf die oben beschriebenen Beispiele beschränkt, sondern ebenso in einer Vielzahl von Abwandlungen möglich, die im Rahmen fachgemäßen Handelns liegen.

## Patentansprüche

1. Verfahren zur Prüfung und Aufrechterhaltung einer vorbestimmten physikalischen Bitrate einer bidirektionalen Verbindung zwischen einer Übertragungsbaugruppe (2) und mindestens einem Endgerät (9), mit folgenden Verfahrensschritten:

   a) Einstellen einer physikalischen Bitrate und Speichern in einem Bitraten-Schwellwertspeicher (5, 5'),

   b) Einstellen mindestens einer Korrekturmaßnahme zur Erhöhung der Bitrate,

   c) Erfassung der aktuellen Bitrate zwischen einer Leitungskarte (4, 4') der Übertragungsbaugruppe (2) und dem Endgerät (9, 9') in Ansprechen auf ein Auslösesignal,

   d) Vergleichen der erfassten aktuellen Bitrate mit der in dem Bitraten-Schwellwertspeicher (5, 5') der Leitungskarte (4, 4') gespeicherten physikalischen Bitrate durch eine Vergleichereinrichtung (10, 10') und Generierung einer Alarmmeldung bei einem Unterschreiten der physikalischen Bitrate durch eine Alarmeinrichtung (11, 11'),

   e) Übertragen der Alarmmeldung an ein externes Steuersystem (12) und

   f) Auslösen der mindestens einen voreingestellten Korrekturmaßnahme durch eine Korrektureinrichtung (14, 14') im Ansprechen auf die Alarmmeldung durch das externe Steuersystem (12).

2. Verfahren zur Festlegung einer Bitrate für eine bidirektionale Verbindung zwischen einer Übertragungsbaugruppe (2) und mindestens einem Endgerät (9),
**dadurch gekennzeichnet, dass**
die maximal erreichbare physikalische Bitrate aufgrund einer Auswertung der Bitfehlerrate bei verschiedenen Systemkonfigurationen erfasst wird, die bei mindestens einer Korrekturmaßnahme gegenüber einer Ausgangskonfiguration entstehen, und diese maximale Bitfehlerrate für den Verbindungsbetrieb eingestellt wird.

3. Verfahren nach Anspruch 2,
**gekennzeichnet durch**
die Erfassung der physikalischen Bitrate der bidirektionalen Verbindung zwischen der Übertragungsbaugruppe (2) und dem Endgerät (9), mit folgenden Verfahrensschritten:

a) Einstellen eines Bitfehlerraten-Schwellwertes und Speichern in einem Bitfehlerraten-Schwellwertspeicher,
b) Einstellen einer theoretisch möglichen physikalischen Bitrate der bidirektionalen Verbindung und Speichern als aktuelle physikalische Bitrate in einem Bitraten-Schwellwertspeicher (5, 5') der Leitungskarte (4, 4'),
c) Übertragen eines Testsignals zwischen der Übertragungsbaugruppe und dem Endgerät mit der aktuellen physikalischen Bitrate,
d) Erfassen der Bitfehlerrate des übertragenen Testsignals mit einer Bitfehlerraten-Messeinrichtung,
e) Vergleichen der erfassten Bitfehlerrate mit dem Bitfehlerraten-Schwellwert **durch** eine mit der Bitfehlerraten-Messeinrichtung und dem Bitfehlerraten-Schwellwertspeicher verbundenen Vergleichereinrichtung und Generieren einer Abbruchmeldung bei einem Unterschreiten des Bitfehlerraten-Schwellwertes und Fortfahren mit Schritt g) oder Generieren einer Fehlermeldung bei einem Überschreiten des Bitfehlerraten-Schwellwertes und
f) Reduzieren der aktuellen Bitrate und Speichern als physikalische Bitrate in dem Bitfehlerraten-Schwellwertspeicher im Ansprechen auf die Fehlermeldung und Fortfahren mit Schritt c),
g) Speichern der aktuellen physikalischen Bitrate in dem Bitraten-Schwellwertspeicher im Ansprechen auf die Abbruchmeldung.

4. Verfahren nach Anspruch 1,
**dadurch gekennzeichnet, dass**
das Auslösesignal nach einer Installation der Leitungskarte (4, 4') und/oder in regelmäßigen Zeitintervallen und/oder nach Überschreiten des Bitfehlerraten-Schwellwertes ausgegeben wird.

5. Verfahren nach Anspruch 1,
**dadurch gekennzeichnet, dass**
das Auslösesignal nach der Auslösung der mindestens einen Korrekturmaßnahme übertragen wird.

6. Verfahren nach einem der vorangehenden Ansprüche,
**dadurch gekennzeichnet, dass**
die Korrekturmaßnahme eine Änderung einer Kabelbelegung und/oder einen Wechsel mindestens eines Übertragungsmoduls und/oder eine Änderung der Vergebührung der bidirektionalen Verbindung umfasst.

7. Verfahren nach einem der vorangehenden Ansprüche,
**dadurch gekennzeichnet, dass**
die physikalischen Bitraten jeweils einer Übertragungsrichtung und jeweils eines Teilnehmeranschlusses von dem externen Steuersystem (12) an die Leitungskarte (4, 4') übertragen werden und in dem Bitraten-Schwellwertspeicher (5, 5') gespeichert werden.

8. Verfahren nach einem der vorangehenden Ansprüche,
**dadurch gekennzeichnet, dass**
die Alarmmeldung über eine SNMP-, HML- oder Corba-Schnittstelle an das externe Steuersystem (12) übertragen wird.

9. Verfahren nach einem der vorangehenden Ansprüche,
**dadurch gekennzeichnet, dass**
die Alarmmeldung mittels eines Leaky-Bucket-Verfahrens generiert wird.

10. Verfahren nach einem der vorangehenden Ansprüche,
**dadurch gekennzeichnet, dass**
die Alarmmeldung in einem Alarmmeldungsspeicher (13, 13') des externen Steuersystems gespeichert wird.

11. Verfahren nach Anspruch 2,
**dadurch gekennzeichnet, dass**
das Testsignal mittels eines in der Leitungskarte (4, 4') angeordneten Enkoders vor der Übertragung mit einer fehlererkennenden oder fehlerkorrigierenden Kanalkodierung kodiert und übertragen wird und die Bitfehlerrate durch die Bitfehlerraten-Messeinrichtung (6, 6') anhand der erkannten oder korrigierten Bitfehler ermittelt wird.

**12.** Übertragungsbaugruppe zur Durchführung des Verfahrens nach einem der vorangehenden Ansprüche, **gekennzeichnet durch**

- eine einer Leitungsverbindung zugeordnete Bitraten-Messeinrichtung (6, 6') zur Erfassung einer aktuellen Bitrate der Leitungsverbindung,
- eine mit der Bitraten-Messeinrichtung (6, 6') und dem Bitraten-Schwellwertspeicher (5, 5') verbundene Vergleichereinrichtung (10, 10') zum Vergleichen der erfassten aktuellen Bitrate mit einer gespeicherten physikalischen Bitraten und
- eine mit der Vergleichereinrichtung (10, 10') verbundene Alarmeinrichtung (11, 11') zum Generieren einer Alarmmeldung bei Unterschreiten der physikalischen Bitrate und zum Übertragen der Alarmmeldung an eine externe Korrektureinrichtung (14, 14').

**13.** Anordnung zur Durchführung des Verfahrens nach einem der Ansprüche 1 bis 11, die eine Übertragungsbaugruppe nach Anspruch 12 aufweist, **gekennzeichnet durch**

- ein mit der Übertragungsbaugruppe (2) verbundenes externes Steuersystem (12),
- einen in dem externen Steuersystem (12) angeordneten Alarmmeldungsspeicher (13, 13') zum Speichern der von der Alarmeinrichtung (11, 11') der Übertragungsbaugruppe (2) gesendeten Alarmmeldung,
- eine mit dem Alarmmeldungsspeicher (13, 13') verbundene Korrektureinrichtung (14, 14') zum Auslösen einer Korrekturmaßnahme und
- einen mit der Korrektureinrichtung (14, 14') verbundenen Korrekturspeicher (15, 15') zum Speichern der mindestens einen Korrekturmaßnahme.

FIG 1

EP 1 326 357 A1

# FIG 2

```
                    ┌─────────┐
                    │  Start  │
                    └─────────┘
                         │
                         ▼
                    ╱─────────╲
                   ╱  Bitrate  ╲         nein
                   ╲unterschritten?╲──────────────────┐
                    ╲─────────╱                        │
                         │ ja                          │
                         ▼                             │
              ┌────────────────────┐                   │
              │   Änderung der     │                   │
              │  Leitungsbelegung  │                   │
              └────────────────────┘                   │
                         │                             │
                         ▼                             │
                    ╱─────────╲                        │
                   ╱  Bitrate  ╲         nein          │
                   ╲unterschritten?╲──────────────┐    │
                    ╲─────────╱                   │    │
                         │ ja                     │    │
                         ▼                        │    │
              ┌────────────────────┐              │    │
              │  Wechsel mindestens │             │    │
              │ eines Übertragungsmoduls│         │    │
              └────────────────────┘              │    │
                         │                        │    │
                         ▼                        │    │
                    ╱─────────╲                   │    │
                   ╱  Bitrate  ╲      nein         │    │
                   ╲unterschritten?╲─────────┐     │    │
                    ╲─────────╱              │     │    │
                         │ ja               │     │    │
                         ▼                   │     │    │
              ┌────────────────────┐         │     │    │
              │ Änderung der Vergebührung│   │     │    │
              │  des Datendienstes  │        │     │    │
              └────────────────────┘         │     │    │
                         │                   │     │    │
                         ▼                   ▼     ▼    ▼
              ┌──────────────────────────────────────────┐
              │                   Ende                    │
              └──────────────────────────────────────────┘
```

# FIG 3

```
                    ┌──────────┐
                    │  Start   │
                    └────┬─────┘
                         │
                         ▼
            ┌──────────────────────────┐
            │      Einstellen eines     │
            │  Bitfehlerraten-Schwellwertes │
            └────────────┬─────────────┘
                         │
                         ▼
            ┌──────────────────────────┐
            │   Speichern in Bitfehlerraten- │
            │      Schwellwertspeicher   │
            └────────────┬─────────────┘
                         │
                         ▼
            ┌──────────────────────────┐
            │      Einstellen einer      │
            │    physikalischen  Bitrate │
            └────────────┬─────────────┘
                         │
                         ▼
            ┌──────────────────────────┐
            │        Speichern in        │◄──────────────┐
            │  Bitraten-Schwellwertspeicher │           │
            └────────────┬─────────────┘                │
                         │                    ┌──────────────────────────┐
                         ▼                    │      Reduzieren der        │
            ┌──────────────────────────┐      │   physikalischen Bitrate   │
            │   Übertragen eines Festsignals │  └────────────▲─────────────┘
            │    mit der physikalischen Bitrate │            │
            └────────────┬─────────────┘                     │
                         │                    ┌──────────────────────────┐
                         ▼                    │      Fehlermeldung         │
            ┌──────────────────────────┐      └────────────▲─────────────┘
            │   Erfassen der Bitfehlerrate │               │
            └────────────┬─────────────┘                   │
                         │                                  │
                         ▼                                  │
                    ╱──────────╲                            │
                  ╱  Bitfehlerrate ╲      nein              │
                 ╱        ≤          ╲────────────────────┘
                 ╲  Bitfehlerraten-  ╱
                  ╲   Schwellwert?  ╱
                    ╲──────────╱
                         │ ja
                         ▼
            ┌──────────────────────────┐
            │      Abbruchmeldung        │
            └────────────┬─────────────┘
                         │
                         ▼
            ┌──────────────────────────┐
            │      Speichern der  Bitrate │
            │  in Bitraten-Schwellwertspeicher │
            └────────────┬─────────────┘
                         │
                         ▼
                    ┌──────────┐
                    │   Ende   │
                    └──────────┘
```

**Europäisches Patentamt**

## EUROPÄISCHER RECHERCHENBERICHT

Nummer der Anmeldung

EP 02 00 0473

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 100 01 150 A (SIEMENS AG) 19. Juli 2001 (2001-07-19) * das ganze Dokument * | 2 | H04L1/00 H04L27/26 H04M11/06 |
| A | | 1,3-13 | H04M3/30 H04M3/18 |
| X | US 6 084 917 A (CHEN CHUNTA ET AL) 4. Juli 2000 (2000-07-04) * Zusammenfassung; Abbildungen 4,5,7,8 * * Spalte 3, Zeile 9 - Spalte 6, Zeile 6 * * Spalte 11, Zeile 22 - Spalte 20, Zeile 9 * | 2 | H04Q11/04 H04L1/20 |
| A | | 1,3-13 | |
| X | WO 99 49610 A (CONEXANT SYSTEMS INC) 30. September 1999 (1999-09-30) * Zusammenfassung; Abbildungen 2-4 * * Seite 1, Zeile 31 - Seite 2, Zeile 29 * * Seite 3, Zeile 32 - Seite 9, Zeile 31 * * Anspruch 1 * | 2 | |
| A | | 1,3-13 | RECHERCHIERTE SACHGEBIETE (Int.Cl.7) |
| A | EP 1 069 721 A (IBM) 17. Januar 2001 (2001-01-17) * Zusammenfassung; Anspruch 1 * | 1-13 | H04L H04M H04Q |

Der vorliegende Recherchenbericht wurde für alle Patentansprüche erstellt

| Recherchenort | Abschlußdatum der Recherche | Prüfer |
|---|---|---|
| MÜNCHEN | 17. Juni 2002 | Nash, M |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie,übereinstimmendes
Dokument

EPO FORM 1503 03.82 (P04C03)

**EP 1 326 357 A1**

## ANHANG ZUM EUROPÄISCHEN RECHERCHENBERICHT
## ÜBER DIE EUROPÄISCHE PATENTANMELDUNG NR.

EP 02 00 0473

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 10001150 | A | 19-07-2001 | DE | 10001150 A1 | 19-07-2001 |
| | | | WO | 0152463 A1 | 19-07-2001 |
| US 6084917 | A | 04-07-2000 | US | 6222888 B1 | 24-04-2001 |
| | | | US | 6292515 B1 | 18-09-2001 |
| WO 9949610 | A | 30-09-1999 | TW | 454394 B | 11-09-2001 |
| | | | WO | 9949610 A1 | 30-09-1999 |
| EP 1069721 | A | 17-01-2001 | EP | 1069721 A2 | 17-01-2001 |

EPO FORM P0461